# EUROPÄISCHE PATENTANMELDUNG

(11) **EP 0 563 582 A2**
(43) Veröffentlichungstag der Anmeldung: **06.10.1993**
(21) Anmeldenummer: 93103169.4
(22) Anmeldetag: 27.02.1993
(51) Int. Cl.: H02B 1/40, H02B 1/26

(54) **Gehäuse zum Einbau von elektrischen oder elektronischen Bauteilen bzw. Baugruppen**

(30) Priorität: 01.04.1992 DE 9204426 U
(71) Anmelder: BOPLA GEHÄUSE SYSTEME GmbH, D-32257 Bünde (DE)
(72) Erfinder: Behrendt, Horst, W-4972 Löhne 4 (DE); Krömer, Andreas, W-4900 Herford (DE); Niehausmeier, Uwe, W-4986 Rödinghausen (DE)
(74) Vertreter: Patentanwälte Dipl.-Ing. Bodo Thielking Dipl.-Ing. Otto Elbertzhagen

(57) **Zusammenfassung**

Ein Gehäuse zum Einbau von elektrischen oder elektronischen Bauteilen bzw. Baugruppen besitzt an seiner Rückwand einen angeformten Aufhängebereich. Der Aufhängebereich besitzt einen hinterschnittenen ersten Schlitz (2a), der zum Aufschieben auf eine Befestigungsschraube mit Schraubenkopf und zum Anliegen eines Schlitzendes auf dem Schraubenschaft ausgebildet ist. Der Aufhängebereich (2) weist einen zweiten, gleich ausgebildeten aber gegenläufig orientierten Schlitz (2b) auf. Diese Ausbildung erlaubt die Verwendung des Gehäuses in zwei unterschiedlichen, um 180° zueinander versetzten Aufhängerichtungen.

## Beschreibung

Die Erfindung betrifft ein Gehäuse zum Einbau von elektrischen oder elektronischen Bauteilen bzw. Baugruppen mit einem an seiner Rückwand angeformten Aufhängebereich, der einen hinterschnittenen Schlitz aufweist, der zum Aufschieben auf eine Befestigungsschraube mit Schraubenkopf und zum Aufliegen eines Schlitzendes auf dem Schraubenschaft ausgebildet ist.

Bei bekannten derartigen Gehäusen ist wegen der Ausgestaltung des Aufhängebereichs die Aufhängerichtung vorgegeben. Dies kann zur Folge haben, daß in bestimmten Anwendungsfällen die Kabelzuführung sich nach der vorgegebenen Aufhängerichtung des Gehäuses orientieren muß.

Der Erfindung liegt deshalb die Aufgabe zugrunde, ein Gehäuse der als bekannt vorausgesetzten Art so auszubilden, daß es zwei unterschiedliche, um 180° zueinander versetzte Aufhängerichtungen erlaubt.

Die Lösung dieser Aufgabe erfolgt dadurch, daß der Aufhängebereich einen zweiten, gleichausgebildeten aber gegenläufig orientierten Schlitz aufweist.

Dabei hat es sich als zweckmäßig erwiesen, daß die beiden Schlitze miteinander fluchten und durch einen gemeinsamen Brückenbereich voneinander getrennt sind. Das erfindungsgemäße Gehäuse erlaubt die Montage in zwei unterschiedlichen Montagerichtungen. Dies ist in zahlreichen Einsatzfällen sehr zweckmäßig.

Nachstehend wird eine bevorzugte Ausführungsform der Erfindung anhand der Zeichnung im einzelnen erläutert. Es zeigen:

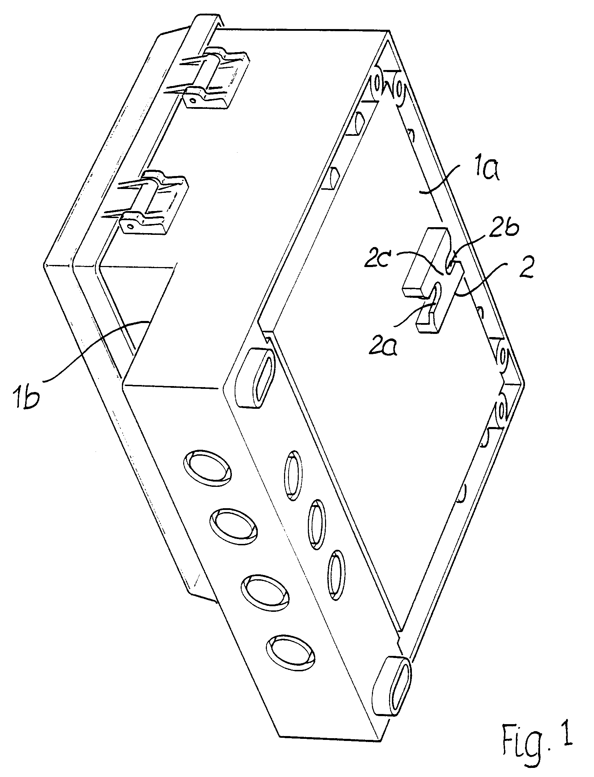

- Figur 1 -: eine perspektivische Ansicht eines Gehäuses schräg von hinten,
- Figur 2 -: eine perspektivische Ansicht des Gehäuses gemäß Figur 1 schräg von vorn, wobei der Klemmenanschlußraum unten sitzt,
- Figur 3 -: das Gehäuse gemäß Figur 2 in um 180° gegenüber Figur 2 verdrehter Anordnung, also mit dem Klemmenanschlußraum oben.

Das insgesamt mit 1 bezeichnete Gehäuse besteht aus Kunststoff und besitzt an seiner Rückseite 1a einen Aufhängebereich 2. In diesem Aufhängebereich sind ein unterer Schlitz 2a und ein oberer Schlitz 2b vorgesehen, die durch einen Brückenbereich 2c voneinander getrennt sind. Ein Querschnitt durch den Aufhängebereich 2 im Bereich des Brückenbereichs 2c zeigt eine U-Form des Aufhängebereichs 2 in der Weise, daß die Basis durch den Brückenbereich 2c verläuft und daß sich die Seitenschenkel anschließend bis in die Rückwand 1a erstrecken.

Mit 1b ist ein Klemmenanschlußraum bezeichnet.

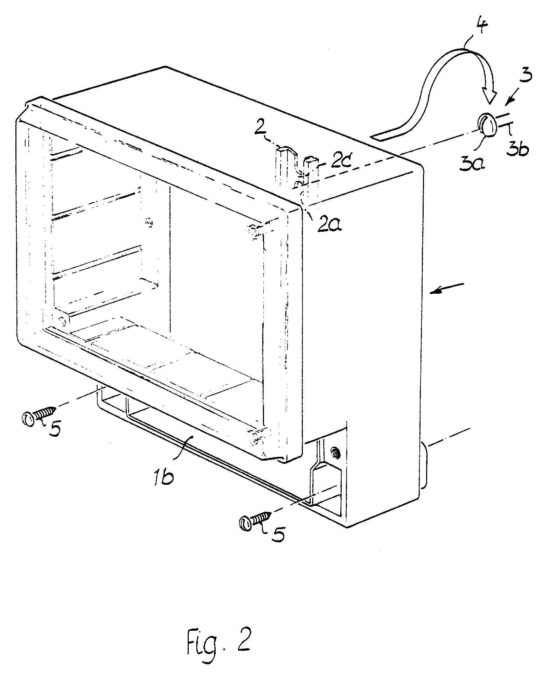

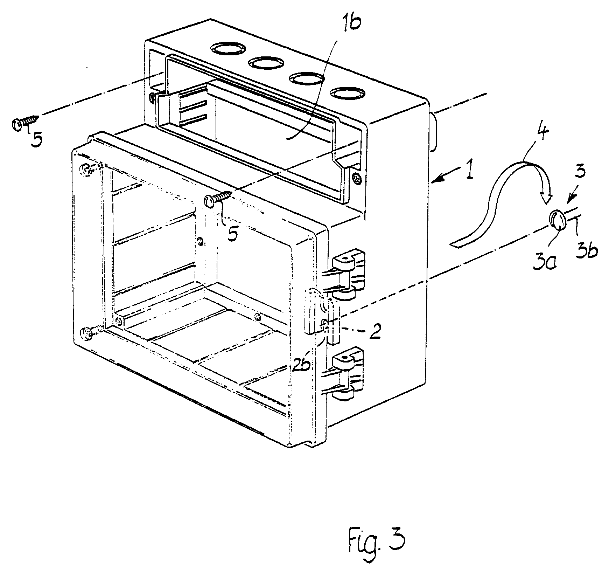

Figuren 2 und 3 zeigen in Perspektivischer Darstellung die unterschiedlichen Aufhängungsrichtungen:
Bei Figur 2 liegt der Schaft 3b einer Befestigungsschraube 3 am Ende des unteren Schlitzes 2a an, während der Schraubenkopf 3a den Brückenbereich 2c hintergreift. Bei dieser Anordnung weist der Klemmenanschlußraum 1b nach unten.

In Figur 3 liegt der obere Schlitz 2b auf dem Schaft 3b der Befestigungsschraube 3 auf, während wiederum der Schraubenkopf 3a den Brückenbereich 2c hintergreift, diesmal jedoch von der anderen Seite. Mit 4 sind in Figuren 2 und 3 Pfeile bezeichnet, die angeben, wie die Aufhängebewegung bewerkstelligt wird.

Nach dem Aufhängen in einer der beiden dargestellten Lagen wird das Gehäuse über Befestigungsschrauben 5 endgültig fixiert, die vorgesehene Öffnungsbereiche in der Rückwand im Bereich des Klemmenanschlußraums 1b durchsetzen.

## Patentansprüche

1. Gehäuse zum Einbau von elektrischen oder elektronischen Bauteilen bzw. Baugruppen mit einem an seiner Rückwand angeformten Aufhängebereich, der einen hinterschnittenen Schlitz aufweist, der zum Aufschieben auf eine Befestigungsschraube mit Schraubenkopf und zum Aufliegen eines Schlitzendes auf dem Schraubenschaft ausgebildet ist,
dadurch gekennzeichnet,
daß der Aufhängebereich (2) einen zweiten, gleichausgebildeten aber gegenläufig orientierten Schlitz (2b) aufweist.

2. Gehäuse nach Anspruch 1,
dadurch gekennzeichnet,
daß die beiden Schlitze (2a und 2b) miteinander fluchten und durch einen gemeinsamen Brückenbereich (2c) voneinander getrennt sind.

3. Gehäuse nach Anspruch 1 oder 2,
dadurch gekennzeichnet,
daß der Aufhängebereich (2) im Brückenbereich (2c) einen U-förmigen Querschnitt der Art aufweist, daß die Basis des U den Brückenbereich bildet und die Seitenschenkel in die Rückwand (1a) münden.
